# EUROPÄISCHE PATENTANMELDUNG

(11) **EP 4 814 325 A1**
(43) Veröffentlichungstag der Anmeldung: **30.09.2026**
(21) Anmeldenummer: 26165975.9
(22) Anmeldetag: 19.03.2026
(51) Int. Cl.: F16B 35/00, B64C 1/14, E05F 5/06, E05F 5/08, F16B 39/02

(54) **ANSCHLAGSCHRAUBE**

(30) Priorität: 26.03.2025 DE 202025101641 U
(71) Anmelder: Erwin Halder KG, 88480 Achstetten-Bronnen (DE)
(72) Erfinder: Halder, Stefan, 88480 Achstetten-Bronnen (DE)
(74) Vertreter: Hentrich Patent- & Rechtsanwaltspartnerschaft mbB

(57) **Zusammenfassung**

Die Erfindung betrifft eine Anschlagschraube (100) mit einem Schraubenkörper (102), mit einem am Außenumfang des Schraubenkörpers (102) zumindest abschnittsweise gebildeten Gewinde (104), mit einer sich entlang einer Längsachse (106) des Schraubenkörpers (102) erstreckenden Zentralausnehmung (108) innerhalb des Schraubenkörpers (102), mit mindestens einer radial bezüglich der Längsachse (106) verstellbaren Rastkugel (110), wobei die mindestens eine Rastkugel (110) in einer im Schraubenkörper (102) radial bezüglich der Längsachse (106) ausgebildeten Kugelöffnung (112) angeordnet ist, wobei die Kugelöffnung (112) mit einem Durchmesser gebildet ist, der hinter einem Kugeldurchmesser der mindestens einen Rastkugel (110) zurückbleibt, mit einem in der Zentralausnehmung (108) angeordneten und axial entlang der Längsachse (106) verschiebbar gelagerten Stößel (114), welcher einen axial entlang der Längsachse (106) orientierten Konus (116) umfasst, der eingerichtet ist, die mindestens eine Rastkugel (110) radial mit einer Kraft zu beaufschlagen, wobei sich an den Konus (116) ein Aufnahmeabschnitt (118) an dem Stößel (114) zur Aufnahme der mindestens einer Rastkugel (110) anschließt, mit einer in der Zentralausnehmung (108) angeordneten und entlang der Längsachse (106) ausgerichteten Feder (120), die den Stößel (114) axial mit einer Federkraft beaufschlagt, und mit einem an einem freien Ende des Schraubenkörpers (102) vorhandenen Anschlagbereich (122), der eine Anschlagfläche (124) bereitstellt, dadurch gekennzeichnet, dass die Anschlagfläche (124) mit einem Radius gebogen ausgeführt ist.

## Beschreibung

Die Erfindung betrifft eine Anschlagschraube mit einem Schraubenkörper, mit einem am Außenumfang des Schraubenkörpers zumindest abschnittsweise gebildeten Gewinde, mit einer sich entlang einer Längsachse des Schraubenkörpers erstreckenden Zentralausnehmung innerhalb des Schraubenkörpers, mit mindestens einer radial bezüglich der Längsachse verstellbaren Rastkugel, wobei die mindestens eine Rastkugel in einer im Schraubenkörper radial bezüglich der Längsachse ausgebildeten Kugelöffnung angeordnet ist, und wobei die Kugelöffnung mit einem Durchmesser gebildet ist, der hinter einem Kugeldurchmesser der mindestens einen Rastkugel zurückbleibt. In der Zentralausnehmung des Schraubenkörpers ist dabei ein axial entlang der Längsachse verschiebbar gelagerter Stößel vorhanden, welcher einen axial entlang der Längsachse orientierten Konus umfasst, der eingerichtet ist, die mindestens eine Rastkugel radial mit einer Kraft zu beaufschlagen, wobei sich an den Konus ein Aufnahmeabschnitt an dem Stößel zur Aufnahme der mindestens einen Rastkugel anschließt. Ferner ist in der Zentralausnehmung eine entlang der Längsachse ausgerichtete Feder angeordnet, die den Stößel axial mit einer Federkraft beaufschlagt. An einem freien Ende des Schraubenkörpers ist ein Anschlagbereich vorhanden, der eine Anschlagfläche bereitstellt.

Eine solche Anschlagschraube mit einem zusätzlichen Anschlagpufferteil ist beispielsweise der WO 2010 145 647 A1 zu entnehmen. Diese hat sich in der Praxis gut bewährt.

Es ist die Aufgabe der vorliegenden Erfindung, eine Anschlagschraube mit einem weniger komplexen Aufbau bereitzustellen.

Diese Aufgabe wird durch eine Anschlagschraube mit den Merkmalen des Anspruchs 1 gelöst. Vorteilhafte Ausgestaltungen mit zweckmäßigen Weiterbildungen der Erfindung sind in den abhängigen Ansprüchen angegeben.

Die erfindungsgemäße Anschlagschraube ist dabei dadurch gekennzeichnet, dass die Anschlagfläche mit einem Radius gebogen ausgeführt ist. Auf diese Weise ist es nicht mehr erforderlich, ein bewegliches Kopfteil vorzusehen, um eine zuverlässige Anlage an die Anschlagschraube zu bewirken. Ein Bauteil kann betriebssicher an der gebogen ausgeführte Anschlagfläche abgestützt werden.

In diesem Zusammenhang ist es von Vorteil, wenn die gebogen ausgeführte Anschlagfläche keine zu starke Biegung aufweist. Denn sonst könnte das mit der Anschlagfläche wechselwirkende Bauteil eine Beschädigung erfahren. In diesem Zusammenhang ist es deshalb von Vorteil, wenn ein Mittelpunkt für den Radius der Anschlagfläche auf der Längsachse auf einer dem Anschlagbereich abgewandten Seite außerhalb des Schraubenkörpers angeordnet ist. Diese Anordnung des - an sich fiktiven - Mittelpunkts sichert zu, dass dieser Mittelpunkt für den Radius der Anschlagfläche weit genug von der Anschlagfläche entfernt angeordnet ist, womit ein nur begrenzter Ausschnitt einer Kugeloberfläche die Anschlagfläche bildet.

In diesem Zusammenhang ist es von Vorteil, wenn der Mittelpunkt von 5 Zentimetern bis 9 Zentimetern von dem Schraubenkörper entfernt angeordnet ist. Um die Anschlagschraube insgesamt kompakt und mit einem flachen Radius zu bilden, ist es von Vorteil, wenn der Mittelpunkt von 7 Zentimetern bis 8 Zentimetern von dem Schraubenkörper entfernt angeordnet ist.

Um die Herstellung zu erleichtern und um die Bauteilanzahl zu reduzieren, hat es sich als vorteilhaft erwiesen, wenn der Schraubenkörper einteilig mit dem Anschlagbereich und der Anschlagfläche gebildet ist.

Um das von der Anschlagschraube abgestützte Bauteil schonend zu kontaktieren und um dadurch die Langzeitstabilität der Anschlagschraube zu verbessern, hat es sich als vorteilhaft erwiesen, wenn die Anschlagfläche mit einer Beschichtung bedeckt ist.

Wenn die Anschlagfläche mit einer Beschichtung versehen ist, ist die Möglichkeit vorhanden, dass die Anschlagfläche auch ungebogen ausgebildet ist, denn so stellt die Beschichtung die Anlagesicherheit zwischen der Anschlagschraube und dem anschlagenden Bauteil, zum Beispiel eine Tür, her. In diesem Fall ist der Abstand des Mittelpunkts für den Radius fiktiv im Unendlichen angeordnet.

Um die Anschlagschraube kompakt zu halten, hat es sich als vorteilhaft erwiesen, wenn die Beschichtung eine Beschichtungsdicke von 0,1 Millimetern bis 0,5 Millimetern umfasst; vorzugsweise ist die Beschichtungsdicke in einem Bereich von 0,2 Millimetern bis 0,4 Millimetern und beträgt bevorzugt im Wesentlichen 0,3 Millimeter.

Es hat sich als vorteilhaft erwiesen, wenn die Beschichtung mindestens ein thermoplastisches Polymer umfasst, da dann ein besonders schonendes, der Langzeitstabilität zuträgliches, Material für die Beschichtung gewählt ist.

In diesem Zusammenhang ist es daher von Vorteil, wenn das mindestens eine thermoplastische Polymer ausgewählt ist aus der Gruppe umfassend Polytetrafluorethylen (PTFE), Polyetherketon (PEK), Polyetheretherketon (PEEK), Polyphenylensulfid (PPS), Polyphthalamid (PPA), Polyamid 6 (PA6), Polyamid 11 (PA11), Polyamid 12 (PA12), Polyamid 46 (PA46), Polyamid 6.6 (PA66), Polycarbonat (PC), Acrylnitril-Butadien-Styrol-Copolymer (ABS). Diese thermoplastischen Polymere zeichnen sich durch eine hohe Stabilität und eine sehr lange Lebensdauer auch nach vielen Anschlagprozessen aus.

Es ist die Möglichkeit vorhanden, dass das Gewinde durch ein erstes Gewindestück und durch ein zweites Gewindestück gebildet ist, wobei das erste Gewindestück bezüglich der Kugelöffnung für die Rastkugel auf der der Anschlagfläche zugewandten Seite des Schraubenkörpers angeordnet ist, wobei das zweite Gewindestück bezüglich der Kugelöffnung für die Rastkugel auf der der Anschlagfläche abgewandten Seite des Schraubenkörpers angeordnet ist. Um im Anschlagbereich die nötige Elastizität am Schraubenkörper herzustellen, ist es von Vorteil, wenn das erste Gewindestück mit einer axialen Erstreckung gebildet ist, die hinter der axialen Erstreckung des zweiten Gewindestücks zurückbleibt.

In diesem Zusammenhang hat es sich als vorteilhaft erwiesen, wenn die axiale Erstreckung des ersten Gewindestücks von 40 Prozent bis 60 Prozent der axialen Erstreckung des zweiten Gewindestücks entspricht. Somit ist das dem Anschlagbereich zugewandte erste Gewindestück also deutlich kürzer ausgebildet als das dem Anschlagbereich abgewandte zweite Gewindestück. Beispielsweise nimmt in dieser Konstellation das erste Gewindestück eine stützende Rolle für den Schraubenkörper und das zweite Gewindestück eine sichernde Rolle für den Schraubenkörper ein, wenn der Schraubenkörper in ein Innengewinde eines Schraubendurchtritts eingeschraubt ist.

Es ist bevorzugt, wenn der Schraubenkörper in seinem Bereich zwischen dem Gewinde und der Anschlagfläche mit einer radialen Einschnürung gebildet ist. Auf diese Weise kann beispielsweise eine leichte elastische Ausweichbewegung stattfinden.

Es hat sich als vorteilhaft erwiesen, wenn das Gewinde gerollt ist. Auf diese Weise ist also das Gewinde widerstandsfähiger gegenüber Ermüdungen gebildet aufgrund des Kaltumformprozesses.

Um die Anschlagschraube insgesamt sehr kompakt bilden zu können, hat es sich als vorteilhaft erwiesen, wenn sich die Zentralausnehmung im Schraubenkörper so weit in Richtung der Anschlagfläche erstreckt, dass die Feder auf ihrem dem Stößel abgewandten Ende in einem gewindefreien Bereich des Schraubenkörpers abgestützt ist.

In diesem Zusammenhang ist es daher vorteilhaft, wenn das vom Stößel abgewandte Ende der Feder und die Anschlagfläche einen axialen Abstand von 2 Millimetern bis 5 Millimetern voneinander einhalten.

Um die Herstellung der Anschlagschraube zu vereinfachen, hat es sich als vorteilhaft erwiesen, wenn der Stößel aus einem Vollmaterial gebildet ist, und wenn eine Stirnseite des Stößels von einem der Anschlagfläche abgewandten Ende der Feder beaufschlagt ist. Anstelle einer flächigen Auflage ist ferner die Möglichkeit vorhanden, dass der Stößel mit einer Federaufnahme nach Art eines Topfes gebildet ist.

Vorzugsweise ist der Stößel auf seinem der Feder abgewandten Ende mit einem Zapfen gebildet, der durch einen Zapfendurchtritt hindurchragt. Der den Zapfendurchtritt umgebende Bereich bildet dabei vorzugsweise einen Anschlag für den Stößel auf seiner der Feder abgewandten Seite.

Um den Zusammenbau der Anschlagschraube selbst zu erleichtern, ist der Zapfendurchtritt an einer Verschlusshülse ausgebildet, welche mit einer Werkzeugaufnahme mit einem Innenunrund gebildet ist. Diese Verschlusshülse bedeckt die Zentralausnehmung des Schraubenkörpers auf seiner der Anschlagfläche abgewandten Seite. Die Werkzeugaufnahme dient der Aufnahme eines an den Innenrund angepassten Werkzeugs, wobei durch das Einbringen eines Werkzeugs in die Werkzeugaufnahme der Stößel axial nach vorne in Richtung der Anschlagfläche verstellt wird, und wobei der Innenunrund für ein Verdrehen der Anschlagschraube insgesamt dient. Mit anderen Worten ragt in einem Sperrzugstand der Zapfen des Stößels in die Werkzeugaufnahme der Verschlusshülse hinein.

Zur - sowohl axialen als auch radialen - Lagefestlegung hat es sich als vorteilhaft erwiesen, wenn die Verschlusshülse durch eine Verstauchung mit dem Schraubenkörper gesichert ist. Auf diese Weise ist also das der Anschlagfläche der Anschlagschraube abgewandte Ende plastisch so verformt, dass der Schraubenkörper mit der Verschlusshülse derart deformiert ist, dass sich die Verschlusshülse axial nicht mehr bewegen und auch radial nicht mehr verdrehen kann.

Es hat sich als vorteilhaft erwiesen, wenn eine Mehrzahl an Rastkugeln über den Umfang des Schraubenkörpers in dazu korrespondierenden Kugelöffnungen angeordnet ist, und wenn die Rastkugeln einen Kugeldurchmesser von 1,5 Millimetern bis 4,5 Millimetern besitzen. Mit dieser Gestaltung ist eine sichere Positionierung der Anschlagschraube in einem Anschlussteil gegeben.

Der, insbesondere für Luftfahrtanwendungen relevante, Langzeitstabilität ist zuträglich, wenn sowohl der Stößel als auch die mindestens eine mit dem Konus wechselwirkende Rastkugel aus V4A-Edelstahl gebildet ist. In diesem Zusammenhang ist es von Vorteil, wenn der Stößel aus V4A-Edelstahl mit der Materialkennung 1.4545, wenn die Kugel mit einem V4A-Edelstahl mit der Materialkennung 1.4125 und wenn die Feder mit der Materialkennung 1.4568 gebildet ist, wobei der Schraubenkörper vorzugsweise selbst ebenfalls aus einem V4A-Edelstahl, insbesondere mit der Materialkennung 1.4545 gebildet ist. Die Verschlusshülse könnte beispielsweise ebenfalls ein V4A-Edelstahl sein, der mit der Materialkennung 1.4404 gebildet ist.

Die vorstehend und nachfolgend beschriebenen Aufgaben, Funktionen und Merkmale werden verdeutlicht durch die nachfolgende Beschreibung, wobei Bezug genommen wird auf die beigefügten Zeichnungen. Dabei zeigen:
- Fig. 1: eine Schnittansicht entlang der Längsachse der Anschlagschraube, wobei sich die Anschlagschraube in einer Sperrstellung mit radial ausgerückten Rastkugeln befindet;
- Fig. 2: eine der Figur 1 entsprechende Ansicht der Anschlagschraube, wobei sich die Anschlagschraube in einer Lösestellung mit radial eingerückten Rastkugeln befindet;
- Fig. 3: eine perspektivische Schnittansicht der aus den Figuren 1 und 2 gezeigten Anschlagschraube, die in einem Anschlussteil aufgenommen ist; und
- Fig. 4: eine perspektivische Ansicht auf einen Teil des Anschlussteils aus Figur 3, ohne eine Anschlagschraube.

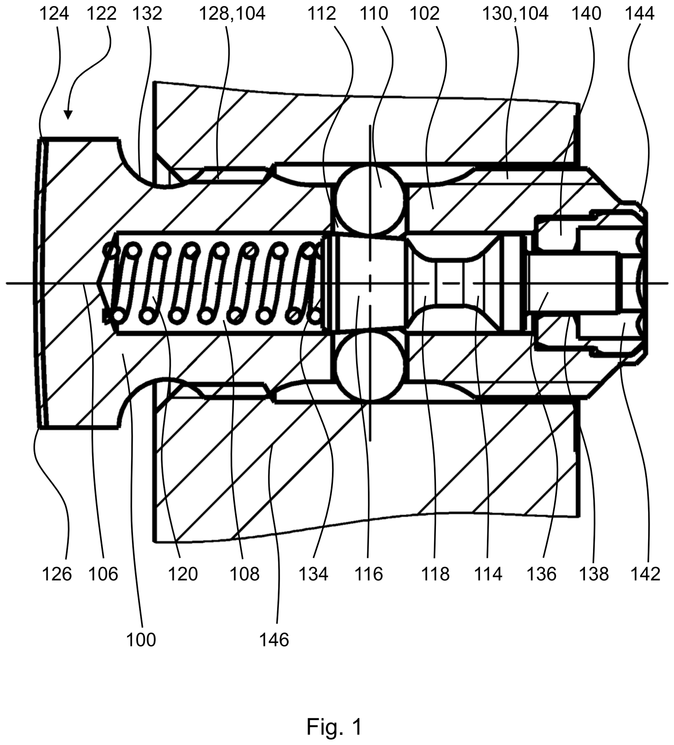

In den Figuren 1 bis 3 ist eine Anschlagschraube 100 gezeigt, die mit einem Schraubenkörper 102 gebildet ist. An einem Außenumfang des Schraubenkörpers 102 ist abschnittsweise ein Gewinde 104 durch Rollen ausgebildet, welches sich vorliegend in ein erstes Gewindestück 128 und ein zweites Gewindestück 130 untergliedert. Es ist zu erkennen, dass innerhalb des Schraubenkörpers 102 eine sich entlang einer Längsachse 106 des Schraubenkörpers 102 erstreckende Zentralausnehmung 108 vorliegt. Innerhalb dieser Zentralausnehmung 108 sind vorliegend mehrere radial bezüglich der Längsachse 106 verstellbare Rastkugeln 102 angeordnet, wobei die Rastkugeln 110 jeweils in einer im Schraubenkörper 102 radial bezüglich der Längsachse 106 ausgebildeten Kugelöffnung 112 angeordnet sind. Jede der Kugelöffnungen 112 ist dabei mit einem Durchmesser gebildet, der hinter einem Kugeldurchmesser der Rastkugeln 110 zurückbleibt, so dass die Rastkugeln 110 zwar aus dem Schraubenkörper 102 herausragen, aber nicht herausfallen können.

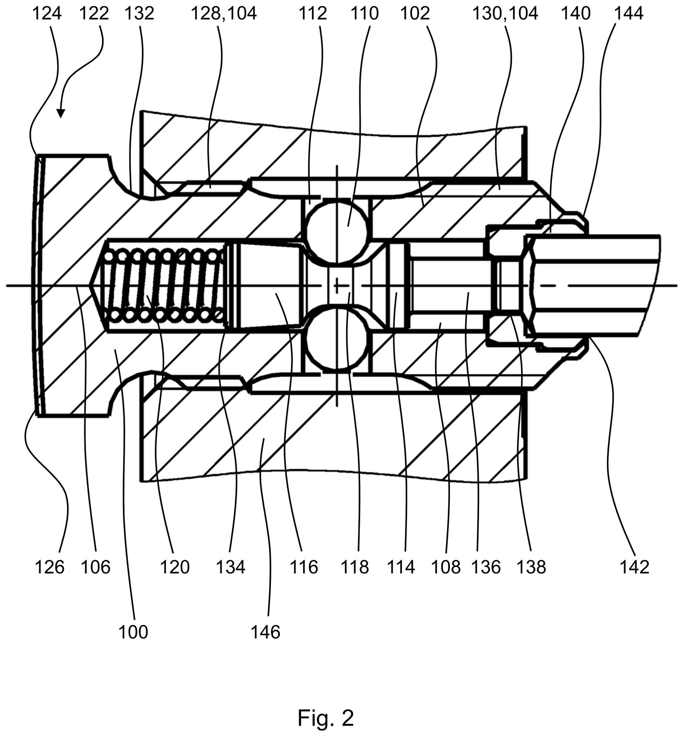

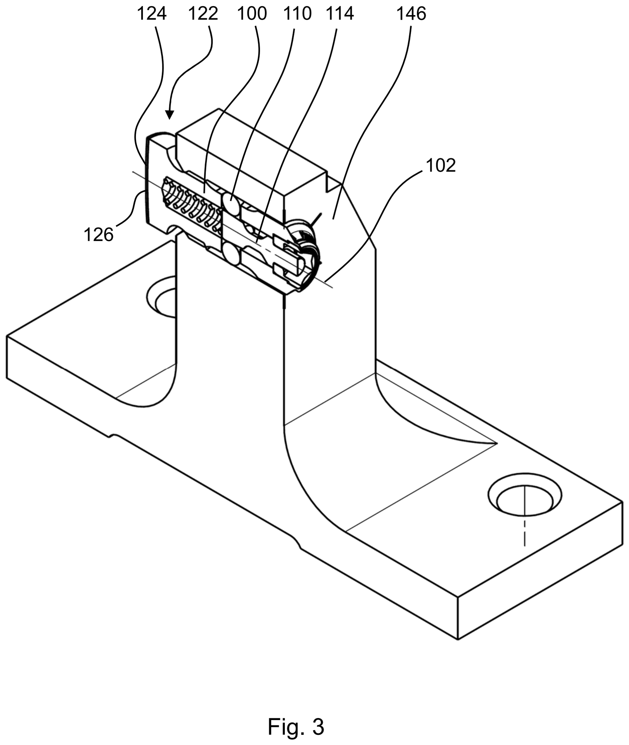

Um die Rastkugeln 110 radial bezüglich der Längsachse 106 verstellen zu können, ist in der Zentralausnehmung 108 ein axial entlang der Längsachse 106 verschiebbar gelagerter Stößel 114 vorhanden. Dieser Stößel 114 umfasst einen axial entlang der Längsachse 106 orientierten Konus 116, der eingerichtet ist, die Rastkugeln 110 radial mit einer Kraft zu beaufschlagen, wobei sich an den Konus 116 ein Aufnahmeabschnitt 118 an dem Stößel 114 anschließt, der der Aufnahme der Rastkugeln 110 dient. Vorliegend ist der Konus 116 in Richtung einer Anschlagfläche 124 aufweitend gebildet. Durch die Verstellung dieses Stößels 114 lässt sich die Anschlagschraube 110 zwischen einer Sperrstellung mit radial ausgerückten Rastkugeln 110 (Figuren 1 und 3) und einer Lösestellung mit radial eingerückten Rastkugeln 110 (Figur 2) verstellen. In der Zentralausnehmung 108 ist eine entlang der Längsachse 106 ausgerichtete Feder 120 angeordnet, die den Stößel 114 axial mit einer Federkraft beaufschlagt, um ihn nach der Betätigung wieder in die Sperrstellung zu pressen.

An einem freien Ende des Schraubenkörpers 102 ist ein Anschlagbereich 122 vorhanden, der dazu dient, um ein Bauteil abzustützen oder der als Anschlag für dieses Bauteil dient. Dieser Anschlagbereich 122 stellt dabei die Anschlagfläche 124 bereit, welche vorliegend mit einem Radius gebogen ausgeführt ist. Es ist zu erkennen, dass die Anschlagfläche 124 einen Flächeninhalt bereitstellt, der über einen Flächeninhalt eines Querschnitt des Schraubenkörpers 102 hinausgeht, der sich im Bereich des Gewindes 104 befindet. Mit anderen Worten ist also das Kopfteil, mithin der Anschlagbereich 122, radial bezüglich der Längsachse 106 mit einer größeren Ausdehnung gebildet als der Schraubenkörper 102 in seinem Bereich des Gewindes 104. Der Anschlagbereich 122 kann dabei einen rotationssymmetrischen Querschnitt besitzen, der beispielsweise einen Durchmesser von 10 Millimetern bis 15 Millimetern umfasst; vorliegend beträgt der Durchmesser im Wesentlichen 12 Millimeter.

Der Radius ist Bestandteil einer fiktiven Kugel, wobei ein Teil der fiktiven Kugeloberfläche identisch mit der Anschlagfläche 124 ist. Der fiktive Mittelpunkt für den Radius, mithin für die bogenförmige Gestaltung der Anschlagfläche 124, befindet sich vorliegend ebenfalls auf der Längsachse 106. Der Mittelpunkt ist allerdings auf einer dem Anschlagbereich 122 abgewandten Seite außerhalb des Schraubenkörpers 102 angeordnet. Er befindet sich vorzugsweise von 5 Zentimetern bis 9 Zentimetern, insbesondere von 7 Zentimetern bis 8 Zentimetern, vorzugsweise im Wesentlichen 7,5 Zentimeter vom Schraubenkörper 102 entfernt; und zwar auf einer der Anschlagfläche 124 abgewandten Seite des Schraubenkörpers 102. In anderen Worten ist die Anschlagfläche 124 also konvex geformt.

Vorliegend ist zu erkennen, dass der Schraubenkörper 102 einteilig mit dem Anschlagbereich 122 und der Anschlagfläche 124 gebildet ist. Die Anschlagfläche 124 ist vorliegend mit einer Beschichtung 126 bedeckt. Liegt eine solche Beschichtung 126 vor, so ist es nicht zwangsläufig erforderlich, dass die Anschlagfläche 124 mit einem Radius gebogen oder konvex ausgeführt ist, da dann über die Beschichtungsdicke eine solche Biegung abgebildet werden kann.

Vorliegend ist jedenfalls eine Beschichtung mit einer Beschichtungsdicke von 0,1 Millimetern bis 0,5 Millimetern vorhanden, wobei sie sich vorliegend im Wesentlichen 0,3 Millimetern dick über die Anschlagfläche 124 hinweg erstreckt. Vorzugsweise ist diese Beschichtung 126 mit einem thermoplastischen Polymer gebildet. Dieses ist vorzugsweise aus einer Gruppe ausgewählt, die Polytetrafluorethylen (PTFE), Polyetherketon (PEK), Polyetheretherketon (PEEK), Polyphenylensulfid (PPS), Polyphthalamid (PPA), Polyamid 6 (PA6), Polyamid 11 (PA11), Polyamid 12 (PA12), Polyamid 46 (PA46), Polyamid 6.6 (PA66), Polycarbonat (PC), Acrylnitril-Butadien-Styrol-Copolymer (ABS) umfasst.

Es ist vorliegend zu erkennen, dass das erste Gewindestück 128 bezüglich der Kugelöffnungen 112 für die Rastkugeln 110 auf der der Anschlagfläche 124 zugewandten Seite des Schraubenkörpers 102 angeordnet ist, wobei das zweite Gewindestück 130 bezüglich der Kugelöffnungen 112 für die Rastkugeln 110 auf der der Anschlagfläche 124 abgewandten Seite des Schraubenkörpers 102 angeordnet ist. Das erste Gewindestück 128 ist mit einer axialen Erstreckung gebildet, die hinter der axialen Erstreckung des zweiten Gewindestücks 130 zurückbleibt. Vorliegend beträgt die axiale Erstreckung des ersten Gewindestücks 128 von 40 Prozent bis 60 Prozent der axialen Erstreckung des zweiten Gewindestücks 130. Zur Erhöhung der Festigkeit sind die Gewindestücke 128, 130, mithin also das ganze Gewinde 104, gerollt ausgeführt; nicht zerspanend bearbeitet.

Der Schraubenkörper 102 ist in seinem Bereich zwischen dem Gewinde 104, vorliegend dem ersten Gewindestück 128 und der Anschlagfläche 124 mit einer radialen Einschnürung 132 versehen, die zu einer Erhöhung der Elastizität des Schraubenkörpers 102 beiträgt.

Um die Anschlagschraube 100 möglichst kompakt zu bilden, erstreckt sich die Zentralausnehmung 108 im Schraubenkörper 102 so weit in Richtung der Anschlagfläche 124, dass die Feder 120 auf ihrem dem Stößel 114 abgewandten Ende in einem gewindefreien Bereich des Schraubenkörpers 102 abgestützt ist. Vorliegend ist die Zentralausnehmung 108 sogar so weit ausgebildet, dass sie auch eine Abstützung in dem Bereich zwischen der radialen Einschnürung 132 und der Anschlagfläche 124 findet. Es halten also das von dem Stößel 114 abgewandte Ende der Feder 120 und die Anschlagfläche 124 einen axialen Abstand von 2 Millimeter bis 5 Millimeter voneinander ein.

Der Stößel 114 selbst ist vorliegend aus einem Vollmaterial gebildet, wobei eine Stirnseite 134 des Stößels 114 von einem der Anschlagfläche 124 abgewandten Ende der Feder 120 beaufschlagt ist. Die Feder 120 drängt ihn damit also von der Anschlagfläche 124 weg in die Sperrstellung. Axial rückseitig ist der Stößel 114, also auf seinem der Feder 120 abgewandten Ende, mit einem Zapfen 136 gebildet, der durch einen Zapfendurchtritt 138 hindurchragt. Dieser Zapfendurchtritt 138 ist vorliegend an einer Verschlusshülse 140 ausgebildet, welche mit einer Werkzeugaufnahme 142, die einen Innenunrund bildet, versehen ist. Der Innenunrund ist vorliegend beispielhaft als ein Innensechskant realisiert. Eine andere Anzahl an Kanten ist ebenfalls möglich. Die Verschlusshülse 140 ist vorliegend durch eine Verstauchung 144 in Form einer plastischen Umformung sowohl des Schraubenkörpers 102 als auch des Materials der Verschlusshülse 140 im Schraubenkörper 102 axial und radial gesichert. Die Verschlusshülse 140 bietet auch einen axial rückwärtigen Anschlag für den Stößel 114 in ihrem Bereich, der sich um den Zapfendurchtritt 138 herum befindet.

Für eine gewünschte Langlebigkeit und eine gewünschte Langzeitstabilität sind der Stößel 114, die Feder 120, die Rastkugeln 110, die Verschlusshülse 140 und der Schraubenkörper 102 aus V4A-Edelstahl gebildet.

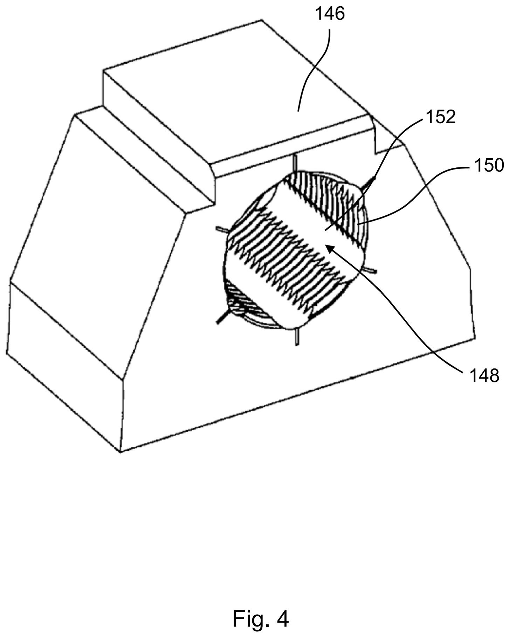

In der Figur 4 ist noch ein Detail eines Anschlussteils 146 gezeigt, in welches die Anschlagschraube 100 eingebracht werden kann. Dieses Anschlussteil 146 ist mit einem Schraubendurchtritt 148 versehen, wobei in dem Schraubendurchtritt 148 bereichsweise ein Innengewinde 150 ausgebildet ist. Ferner liegen Rastaufnahmen 152 vor, die sich ebenfalls axial durch den Schraubendurchtritt 148 erstrecken; sie können sich auch nur bereichsweise axial erstrecken.

Wird nun eine Anschlagschraube 100 in dieses Anschlussteil 146 angeschraubt, so ist beim Verschrauben zunächst die Anschlagschraube 100 in die Lösestellung zu verstellen, damit die Rastkugeln 110 radial bezüglich der Längsachse 106 einrücken und eine Verdrehung ermöglicht ist. Hat die Anschlagschraube 100 dann ihre finale axiale Lage erreicht, so wird die Kraft gegen die Feder 120 gelöst, was dazu führt, dass die Rastkugeln 110 radial nach außen gepresst werden durch den Konus 116 am Stößel 114. Dabei treten die Rastkugeln 110 in die Rastaufnahmen 152 des Anschlussteils 146 ein und bewirken somit eine Verdrehsicherung der Anschlagschraube 100. Auf diese Weise wird die Anschlagschraube 100 radial und axial am Anschlussteil 146 gesichert.

### BEZUGSZEICHEN

- 100: Anschlagschraube
- 102: Schraubenkörper
- 104: Gewinde (Schraubenkörper)
- 106: Längsachse (Schraubenkörper)
- 108: Zentralausnehmung (Schraubenkörper)
- 110: Rastkugel
- 112: Kugelöffnung (Schraubenkörper)
- 114: Stößel
- 116: Konus (Stößel)
- 118: Aufnahmeabschnitt (radiale Ausnehmung / Stößel)
- 120: Feder
- 122: Anschlagbereich (Schraubenkörper)
- 124: Anschlagfläche (Schraubenkörper)
- 126: Beschichtung
- 128: erstes Gewindestück
- 130: zweites Gewindestück
- 132: Einschnürung (Schraubenkörper)
- 134: Stirnseite (Stößel)
- 136: Zapfen (Stößel)
- 138: Zapfendurchtritt (an Schraubenkörper oder an Verschlusshülse)
- 140: Verschlusshülse
- 142: Werkzeugaufnahme
- 144: Verstauchung
- 146: Anschlussteil
- 148: Schraubendurchtritt
- 150: Innengewinde
- 152: Rastaufnahme

## Patentansprüche

1. Anschlagschraube (100)
mit einem Schraubenkörper (102),
mit einem am Außenumfang des Schraubenkörpers (102) zumindest abschnittsweise gebildeten Gewinde (104),
mit einer sich entlang einer Längsachse (106) des Schraubenkörpers (102) erstreckenden Zentralausnehmung (108) innerhalb des Schraubenkörpers (102),
mit mindestens einer radial bezüglich der Längsachse (106) verstellbaren Rastkugel (110), wobei die mindestens eine Rastkugel (110) in einer im Schraubenkörper (102) radial bezüglich der Längsachse (106) ausgebildeten Kugelöffnung (112) angeordnet ist, wobei die Kugelöffnung (112) mit einem Durchmesser gebildet ist, der hinter einem Kugeldurchmesser der mindestens einen Rastkugel (110) zurückbleibt,
mit einem in der Zentralausnehmung (108) angeordneten und axial entlang der Längsachse (106) verschiebbar gelagerten Stößel (114), welcher einen axial entlang der Längsachse (106) orientierten Konus (116) umfasst, der eingerichtet ist, die mindestens eine Rastkugel (110) radial mit einer Kraft zu beaufschlagen, wobei sich an den Konus (116) ein Aufnahmeabschnitt (118) an dem Stößel (114) zur Aufnahme der mindestens einer Rastkugel (110) anschließt,
mit einer in der Zentralausnehmung (108) angeordneten und entlang der Längsachse (106) ausgerichteten Feder (120), die den Stößel (114) axial mit einer Federkraft beaufschlagt,
und mit einem an einem freien Ende des Schraubenkörpers (102) vorhandenen Anschlagbereich (122), der eine Anschlagfläche (124) bereitstellt,
**dadurch gekennzeichnet, dass**
die Anschlagfläche (124) mit einem Radius gebogen ausgeführt ist.

2. Anschlagschraube (100) nach Anspruch 1, **dadurch gekennzeichnet, dass** ein Mittelpunkt für den Radius der Anschlagfläche (124) auf der Längsachse (106) auf einer dem Anschlagbereich (122) abgewandten Seite außerhalb des Schraubenkörpers (102) angeordnet ist.

3. Anschlagschraube (100) nach Anspruch 2, **dadurch gekennzeichnet, dass** der Mittelpunkt von 5 Zentimetern bis 9 Zentimetern von dem Schraubenkörper (102) entfernt angeordnet ist.

4. Anschlagschraube (100) nach einem der Ansprüche 1 bis 3, **dadurch gekennzeichnet, dass** der Schraubenkörper (102) einteilig mit dem Anschlagbereich (122) und der Anschlagfläche (124) gebildet ist.

5. Anschlagschraube (100) nach einem der Ansprüche 1 bis 4, **dadurch gekennzeichnet, dass** die Anschlagfläche (124) mit einer Beschichtung (126) bedeckt ist.

6. Anschlagschraube (100) nach Anspruch 5, **dadurch gekennzeichnet, dass** die Beschichtung (126) mindestens ein thermoplastisches Polymer umfasst.

7. Anschlagschraube (100) nach Anspruch 6, **dadurch gekennzeichnet, dass** das mindestens eine thermoplastische Polymer ausgewählt ist aus der Gruppe umfassend Polytetrafluorethylen (PTFE), Polyetherketon (PEK), Polyetheretherketon (PEEK), Polyphenylensulfid (PPS), Polyphthalamid (PPA), Polyamid 6 (PA6), Polyamid 11 (PA11), Polyamid 12 (PA12), Polyamid 46 (PA46), Polyamid 6.6 (PA66), Polycarbonat (PC), Acrylnitril-Butadien-Styrol-Copolymer (ABS).

8. Anschlagschraube (100) nach einem der Ansprüche 1 bis 7, **dadurch gekennzeichnet, dass** das Gewinde (104) durch ein erstes Gewindestück (128) und durch ein zweites Gewindestück (130) gebildet ist, wobei das erste Gewindestück (128) bezüglich der Kugelöffnung (112) für die Rastkugel (110) auf der der Anschlagfläche (124) zugewandten Seite des Schraubenkörpers (102) angeordnet ist, wobei das zweite Gewindestück (130) bezüglich der Kugelöffnung (112) für die Rastkugel (110) auf der der Anschlagfläche (124) abgewandten Seite des Schraubenkörpers (102) angeordnet ist, und wobei das erste Gewindestück (128) mit einer axialen Erstreckung gebildet ist, die hinter der axialen Erstreckung des zweiten Gewindestücks (130) zurückbleibt.

9. Anschlagschraube (100) nach Anspruch 8, **dadurch gekennzeichnet, dass** die axiale Erstreckung des ersten Gewindestücks (128) von 40 Prozent bis 60 Prozent der axialen Erstreckung des zweiten Gewindestücks (130) entspricht.

10. Anschlagschraube (100) nach einem der Ansprüche 1 bis 9, **dadurch gekennzeichnet, dass** der Schraubenkörper (102) in seinem Bereich zwischen dem Gewinde (104) und der Anschlagfläche (124) mit einer radialen Einschnürung (132) gebildet ist.

11. Anschlagschraube (100) nach einem der Ansprüche 1 bis 10, **dadurch gekennzeichnet, dass** sich die Zentralausnehmung (108) im Schraubenkörper (102) so weit in Richtung der Anschlagfläche (124) erstreckt, dass die Feder (120) auf ihrem dem Stößel (114) abgewandten Ende in einem gewindefreien Bereich des Schraubenkörpers (102) abgestützt ist.

12. Anschlagschraube (100) nach einem der Ansprüche 1 bis 11, **dadurch gekennzeichnet, dass** der Stößel (114) aus einem Vollmaterial gebildet ist, und dass eine Stirnseite (134) des Stößels (114) von einem der Anschlagfläche (124) abgewandten Ende der Feder (120) beaufschlagt ist.

13. Anschlagschraube (100) nach einem der Ansprüche 1 bis 12, **dadurch gekennzeichnet, dass** der Stößel (114) auf seinem der Feder (120) abgewandten Ende mit einem Zapfen (136) gebildet ist, der durch einen Zapfendurchtritt (138) hindurchragt.

14. Anschlagschraube (100) nach Anspruch 13, **dadurch gekennzeichnet, dass** die axiale Lage der Verschlusshülse (140) durch eine Verstauchung (144) mit dem Schraubenkörper (102) gesichert ist.

15. Anschlagschraube (100) nach einem der Ansprüche 1 bis 14, **dadurch gekennzeichnet, dass** eine Mehrzahl an Rastkugeln (110) über den Umfang des Schraubenkörpers (102) in dazu korrespondierenden Kugelöffnungen (112) angeordnet ist, und dass die Rastkugeln (110) einen Kugeldurchmesser von 1,5 Millimetern bis 4,5 Millimetern besitzen.
